**Europäisches Patentamt**

**European Patent Office**

**Office européen des brevets**

(19)

(11) Veröffentlichungsnummer: **0 033 104**
**B1**

(12) **EUROPÄISCHE PATENTSCHRIFT**

(45) Veröffentlichungstag der Patentschrift:
**18.12.85**

(21) Anmeldenummer: **81100322.7**

(22) Anmeldetag: **17.01.81**

(51) Int. Cl.⁴: **C 08 G 59/10, C 08 G 59/26,**
**C 08 G 59/28, C 08 G 69/48,**
**C 08 G 73/02, D 21 H 3/48**

(54) Verfahren zur Herstellung von wasserlöslichen Kondensationsprodukten und deren Verwendung als Vernetzer zur Herstellung von Hilfsmitteln für die Papierherstellung.

(30) Priorität: **01.02.80 DE 3003648**

(43) Veröffentlichungstag der Anmeldung:
**05.08.81 Patentblatt 81/31**

(45) Bekanntmachung des Hinweises auf die Patenterteilung:
**18.12.85 Patentblatt 85/51**

(84) Benannte Vertragsstaaten:
**AT BE CH DE FR GB IT LI NL SE**

(56) Entgegenhaltungen:
**DE - A - 2 052 023**
**FR - A - 2 020 415**

**J. GOSSOT "Les matières plastiques,**
**Fabrication-Technologie" 3. Auflage 1968, DUNOD,**
**Paris**

**Die Akte enthält technische Angaben, die nach dem**
**Eingang der Anmeldung eingereicht wurden und die**
**nicht in dieser Patentschrift enthalten sind.**

(73) Patentinhaber: **BASF Aktiengesellschaft,**
**Carl-Bosch-Strasse 38, D-6700 Ludwigshafen (DE)**

(72) Erfinder: **Hertel, Otto, Dr., Koenigsbacher Strasse 68,**
**D-6700 Ludwigshafen (DE)**
Erfinder: **Scharf, Emil, Dr., Mohnstrasse 51,**
**D-6700 Ludwigshafen (DE)**
Erfinder: **MELZER JAROSLAV, Kirchenstrasse 116,**
**D-6700 Ludwigshafen (DE)**

**Beschreibung**

Es ist bekannt, bei der Herstellung von Papier und Karton Polyäthylenimin als Hilfsmittel zur Entwässerungsbeschleunigung sowie zur Fixierung von Pigmenten, Feinstfasern und anderen anionisch reagierenden Zusatzstoffen im Papier zu verwenden. Polyäthylenimin ist jedoch nur im neutralen und schwach sauren pH-Bereich als Hilfsmittel in der Papierindustrie brauchbar. Man hat daher Produkte entwickelt, die auch im sauren pH-Bereich als Entwässerungshilfsmittel und Retentionsmittel eingesetzt werden können. Produkte dieser Art werden beispielsweise durch Umsetzung von Polyaminen mit Epichlorhydrin hergestellt., vgl. DE-OS 15 70 296. Es ist ausserdem bekannt, dass man durch Vernetzen von Polyamidoaminen mit Epichlorhydrin Retentionsmittel und Entwässerungshilfsmittel herstellen kann. Während vernetzte Polyamine die beste Wirkung im neutralen pH-Bereich haben, liegt das Wirkungsmaximum vernetzter Polyamidoamine im sauren pH-Bereich.

Aus der DE-OS 17 95 392 ist ein Verfahren zur Herstellung von wasserlöslichen vernetzten Polyamidoaminen bekannt, bei dem man Polyamidoamine mit difunktionellen Vernetzern umsetzt, die durch Reaktion von Bis-tert.-Aminen oder sekundären Aminen mit Epichlorhydrin hergestellt werden. Die dabei erhaltenen wasserlöslichen, vernetzten Polyamidoamine werden als Flockungsmittel, Flotationsmittel und Retentionsmittel in der Papierindustrie bzw. als Hilfsmittel bei der Reinigung von Schwebestoffe enthaltenden Abwässern verwendet. Wegen des Gehalts an quaternären Stickstoffatomen lässt die Wirksamkeit der so erhaltenen wasserlöslichen vernetzten Polyamidoamine bei der Anwendung als Papierhilfsmittel zu wünschen übrig.

Aus der DE-OS 24 34 816 ist ein Verfahren zur Herstellung von stickstoffhaltigen Kondensationsprodukten bekannt, bei dem man gegebenenfalls mit Äthylenimin gepfropfte Polyamidoamine mit α,ω-Chlorhydrinäthern von Polyalkylenoxiden mit 8 bis 100 Alkylenoxideinheiten bis zur Bildung gerade noch wasserlöslicher Produkte umsetzt. Diese Produkte besitzen bei der Anwendung als Papierhilfsmittel sehr gute Wirksamkeiten sowohl im sauren wie auch im neutralen pH-Bereich, haben aber eine relativ niedrige Kationenaktivität. Aus Gründen des Umweltschutzes ist man bei der Papierfabrikation jedoch gezwungen, den Frischwasserbedarf pro kg erzeugtes Papier weitmöglichst zu senken. Man geht daher dazu über, die Wasserkreisläufe in Papiermaschinen immer mehr zu schliessen. Diese Massnahme führt beispielsweise zu einer Anhäufung extrem hoher Feinstoffanteile und zur Aufkonzentrierung von löslichen Störstoffen im Kreislaufwasser der Papiermaschine. Dadurch ergeben sich beispielsweise Probleme bei der Entwässerung und auch Qualitätsverschlechterungen des erzeugten Papiers. Mit den Papierhilfsmitteln, die sich bisher in der Praxis bewährt haben, sind die Probleme, die bei geschlossenen Wasserkreisläufen in Papiermaschinen auftreten, nicht immer zu lösen.

Aus der DE-AS 20 52 023 ist ein Verfahren zur Herstellung von wasserlöslichen härtbaren Polyalkanolaminharzen bekannt, bei dem man Epichlorhydrin mit Ammoniak und/oder aliphatischen Polyaminen oder Mischungen davon in wässriger Lösung umsetzt. Das Verfahren wird zweistufig durchgeführt, wobei man in einer ersten Stufe eine Lösung eines Vorpolymeren durch Umsetzung von 0,3 bis 0,7 Mol Epichlorhydrin mit jedem Ammoniakwasserstoff mit der Massgabe herstellt, dass das Polyamin mindestens 2 Wasserstoffatome pro Molekül besitzt und in einer zweiten Stufe 0,5 bis 1,7 Gew.-Teile Epichlorhydrin für jeden Gewichtsteil des Vorpolymeren zu der Lösung gibt und die Umsetzung zu Ende führt. Die so erhaltenen Harze werden als Mittel zur Verbesserung der Nassfestigkeit von Papier verwendet.

Aufgabe der Erfindung ist es daher, Vernetzer auf Basis von wasserlöslichen Kondensationsprodukten und Produkte mit einer hohen Kationenaktivität und einer optimalen Wirkung im sauren pH-Bereich als Retentionsmittel und Entwässerungshilfsmittel für die Papierfabrikation zur Verfügung zu stellen.

Die Aufgabe wird bei dem eingangs beschriebenen Verfahren erfindungsgemäss dadurch gelöst, dass man in der ersten Stufe disekundäre Diamine mit Epichlorhydrin und/oder Dichlorhydrin in einem Molverhältnis von 1:0,5 bis 1:1 in dem pH-Bereich von 9 bis 12 kondensiert, wobei man eine anorganische Base zusetzt, um den pH-Wert während der Kondensation in dem Bereich von 9 bis 12 zu halten, und in der zweiten Stufe das in der ersten Stufe erhaltene Kondensationsprodukt nach Zusatz einer Säure mit 1 bis 70 Gew.-Teilen, bezogen auf 100 Gewichtsteile des Kondensationsproduktes der ersten Stufe, Epichlorhydrin und/oder Dichlorhydrin in dem pH-Bereich von 4 bis 8,5 umsetzt.

Die Vernetzer, die durch zweistufige Kondensation von disekundären Diaminen mit Epichlorhydrin und/oder Dichlorhydrin hergestellt werden, sind im allgemeinen als Vernetzer zur Herstellung von wasserlöslichen kationischen Harzen geeignet, die eine hohe Kationenaktivität haben und trotzdem im sauren pH-Bereich und im neutralen pH-Bereich wirksame Papierhilfsmittel sind. Sie können beispielsweise zum Vernetzen von Polyaminen, Polyamidoaminen, äthyleniminmodifizierten Polyamidoaminen oder Polyätheraminen verwendet werden. Geeignete Polyamine sind beispielsweise Diäthylentriamin, Äthylendiamin, Triäthylentetramin, Dipropylentriamin, Tripropylentetramin, Tetraäthylenpentamin sowie Polyäthylenimine, die bis zu 1000 Äthylenimineinheiten enthalten.

Polyamidoamine werden durch Umsetzung von Dicarbonsäuren mit 4 bis 10 Kohlenstoffatomen mit Polyalkylenpolyaminen erhalten, die 3 bis 10 basische Stickstoffatome im Molekül aufweisen. Geeignete Dicarbonsäuren sind beispielsweise Bernsteinsäure, Maleinsäure, Adipinsäure, Glutarsäure, Korksäure, Sebacinsäure oder Terephthalsäure. Für die Herstellung der Polyamide ist es auch möglich, Mischungen von Dicarbonsäuren zu verwenden, z.B. Mischungen aus Adipinsäure und Glutarsäure oder Maleinsäure und Adipinsäure. Vorzugsweise verwendet man Adipinsäure. Diese Dicarbonsäuren werden mit Polyalkylenpolyaminen oder Gemischen davon kondensiert, die 3 bis 10 basische Stickstoffatome im Molekül enthalten, z.B. Diäthylentriamin, Triäthylentetramin, Tetraäthylenpentamin, Dipropylentriamin, Tripropylentetramin oder Dihexamethylentriamin. Die Amine können gegebenenfalls bis zu 10 Gew.% eines Diamins, wie Äthylendiamin oder Hexamethylendiamin, enthalten. Die Kondensation der Dicarbonsäuren mit den Polyalkylenpolyaminen mit vorzugsweise in Substanz durchgeführt, kann jedoch auch in einem gegenüber diesen Substanzen inerten Lösungsmittel vorgenommen werden. Die Kondensation erfolgt in dem Temperaturbereich von 80 bis 200 °C. Das bei der Reaktion entstehende Wasser wird aus dem System abdestilliert. Die Kondensation kann auch in Gegenwart von Lactonen oder Lactamen von Carbonsäuren mit 5 bis 12 Kohlenstoffatomen vorgenommen werden. Diese Produkte werden in das Polyamidoamin eingebaut. Pro Mol Dicarbonsäure verwendet man 0,8 bis 1,4 Mol eines Polyalkylenpolyamins.

Besonders wirksame Retentionsmittel und Entwässerungshilfsmittel, die eine besonders hohe Kationenaktivität aufweisen, erhält man, wenn man auf die Polyaminoamide Äthylenimin pfropft. Die Äthylenimin modifizierten Polyamidoamine werden hergestellt, indem man Äthylenimin in Gegenwart von Lewissäuren, z.B. Bortrifluoridätherat oder Schwefelsäure, auf die Polyamidoamine aufpropft. Bei der Pfropfungsreaktion verwendet man, bezogen auf 100 Gew.-Teile eines Polyamidoamins, 20 bis 400, vorzugsweise 50 bis 300 Gew.-Teile Äthylenimin. Polyamidoamine und mit Äthylenimin modifizierte Polyamidoamine sind beispielsweise aus der DE-OS 24 34 816 bekannt. Polyamine, die sich zur Herstellung von Papierhilfsmitteln eignen, werden in der DE-OS 15 70 296 beschrieben.

Polyätheramine sind Verbindungen, die beispielsweise durch Umsetzung von aliphatischen Polyaminen, wie sie beispielsweise in der DE-OS 15 70 296 beschrieben werden, mit Polyepihalogenhydrinen, die 2 bis 30 Halogenmethylreste enthalten, hergestellt werden. Polyätheramine werden auch erhalten, indem man 2 bis 100, vorzugsweise 8 bis 50 Äthylenoxideinheiten enthaltende Polyglykole an den endständigen OH-Gruppen mit Epichlorhydrin in die entsprechenden $\alpha$, $\omega$-Dichlorhydrinäther überführt und diese dann mit Polyaminen, Ammoniak oder Aminen reagieren lässt.

Für die Vernetzung von Verbindungen der oben beschriebenen Klassen werden Kondensationsprodukte verwendet, die durch eine zweistufige Umsetzung von disekundären Diaminen mit Epichlorhydrin und/oder Dichlorhydrin erhalten werden. Geeignete disekundäre Diamine sind Piperazin, C-alkylierte Piperazine, wie 2,6-Dimethylpiperazin, 2,5-Dimethylpiperazin, 2-Äthylpiperazin und 2-Phenylpiperazin, Bis-piperazino-äthylen und N,N'-Dialkylalkylendiamine, wie N,NDimethyläthylendiamin, N,N'-Dimethylpropylendiamin-1,3, N,N'-Diäthyläthylendiamin und N,N'-Dipropyläthylendiamin. Vorzugsweise verwendet man Piperazin, weil man hierdurch Produkte mit einer besonders hohen Kationenaktivität erhält.

Die disekundären Diamine werden mit Epichlorhydrin und/oder Dichlorhydrin umgesetzt. Die Umsetzung dieser Verbindungen mit den disekundären Diaminen wird zweistufig durchgeführt, wobei man in der ersten Reaktionsstufe die Kondensation in den pH-Bereich von 9 bis 12 vornimmt unter Bildung eines primären Kondensationsprodukts, bei dem das Molverhältnis von disekundären Diaminen zu Epichlorhydrin bzw. Dichlorhydrin 1:0,5 bis 1:1 beträgt. Die Umsetzung dieser Verbindungen zu den polymeren Vernetzern, die erfindungsgemäss zur Herstellung der wasserlöslichen Harze verwendet werden, kann in Substanz, in einem organischen Lösungsmittel oder in Wasser bzw. Mischungen aus Wasser und organischen Lösungsmitteln erfolgen.

Als organische Lösungsmittel werden vorzugsweise Verbindungen verwendet, die mit Wasser mischbar sind, z.B. $C_1$- bis $C_4$-Alkohole, Glykol, Glyzerin, Polyäthylenglykol und teilweise bzw. vollständig verätherte Glykole bzw. Polyglykole.

Die Umsetzung wird bei Temperaturen zwischen 20 und 180 °C, vorzugsweise 40 bis 100 °C durchgeführt. Sofern Temperaturen angewendet werden, die über dem Siedepunkt des jeweils eingesetzten Lösungsmittels liegen, wird die Reaktion unter Druck durchgeführt. In der ersten Reaktionsstufe beträgt der pH-Wert des Reaktionsgemisches 9 bis 12, vorzugsweise 9,5 bis 10,5. Da bei der Reaktion HCl frei wird, fällt der pH-Wert mit fortschreitender Reaktion allmählich ab. In der ersten Reaktionsstufe entsteht bei pH-Werten oberhalb 9 ein Kondensationsprodukt. Die Kondensation kann gestoppt werden, sofern man den pH-Wert der viskosen Lösung auf Werte < 7 erniedrigt. Um den pH-Wert während der Kondensation in dem Bereich von 9 bis 12 zu halten, ist es erforderlich, eine anorganische Base zuzusetzen, z.B. Natronlauge, Kalilauge, Calciumhydroxid, Calciumoxid, Soda, Pottasche und Calciumcarbonat. Die Reaktion in der ersten Stufe wird zweckmässigerweise so geführt, dass man äquimolare Mengen Natronlauge (oder einer anderen anorganischen Base) mit dem Epichlorhydrin in dem Masse zutropft, dass ein pH von 9 bis 12 aufrechterhalten wird oder die gesamte Menge an anorganischer Base zusammen mit dem Amin vorlegt.

An die freien NH-Gruppierungen, die das primäre Kondensationsprodukt jeweils an den Kettenenden enthält, wird dann in der zweiten Stufe im pH-Bereich von 4 bis 8,5 Eipichlorhydrin und/oder Dichlorhydrin angelagert.

In der zweiten Stufe wird der pH-Wert dadurch eingestellt, dass man zum Reaktionsgemisch Säure hinzugibt. Für die zweite Reaktionsstufe wird ein pH-Wert von 4,0 bis 8,5, vorzugsweise 5,5 bis 8 benötigt. Zur Einstellung des pH-Wertes können organische Säuren, wie Ameisensäure, Essigsäure, Propionsäure, Oxalsäure, Toluolsulfonsäure, oder anorganische Säuren wie Schwefelsäure oder Salzsäure verwendet werden. Pro Mol des in der ersten Reaktionsstufe hergestellten Oligomeren bzw. hochmolekularen Kondensationsproduktes benötigt man mindestens 2, vorzugsweise 2 bis 3 Mol Epichlorhydrin oder Dichlorhydrin. In der zweiten Stufe wird also das in der ersten Stufe erhaltene Kondensationsprodukt mit weiteren difunktionellen Vernetzungsmittel (Epichlorhydrin bzw. Dichlorhydrin) umgesetzt. Man benötigt dafür, bezogen auf 100 Gew.-Teile des in der ersten Stufe erhaltenen Kondensationsprodukts, 1 bis 70, vorzugsweise 10 bis 60 Gew.-Teile Epichlorhydrin und/oder Dichlorhydrin. Man kann Mischungen aus Epichlorhydrin und Dichlorhydrin in der ersten und zweiten Stufe der Kondensation einsetzen oder in der ersten Stufe Epichlorhydrin als difunktionellen Vernetzer verwenden oder umgekehrt sowie auch die beiden genannten Stoffe allein in der ersten und zweiten Stufe verwenden. Die so hergestellten polymeren Vernetzer sind in Wasser löslich. Die Viskosität 20 gew.%iger wässriger Lösungen der Vernetzer liegt in dem Bereich von 5 bis 1000 mPas und beträgt vorzugsweise 10 bis 100 mPas (gemessen bei 20 °C).

Polyamine, Polyamidoamine, die gegebenenfalls mit Äthylenimin gepfropft sind, oder Polyätheramine werden in wässriger Lösung mit den oben beschriebenen Kondensationsprodukten aus disekundären Diaminen und Epichlorhydrin und/oder Dichlorhydrin vernetzt. Die Temperaturen bei der Umsetzung liegen zwischen 20 und 200 °C und betragen vorzugsweise 40 bis 100 °C. Sofern die Umsetzung bei Temperaturen oberhalb von 100 °C durchgeführt werden soll, arbeitet man in Druckapparaturen. Die Konzentration der Harzlösungen in Wasser kann in einem weiten Bereich schwanken, z.B. zwischen 1 bis 50 Gew.%. Die Konzentration der Lösung wird vorzugsweise so gewählt, dass Harzlösungen entstehen, die 5 bis 30 Gew.% Feststoffgehalt aufweisen.

Das Verhältnis von polymerem Vernetzer zu den Verbindungen, die damit umgesetzt werden sollen, kann ebenfalls in einem weiten Bereich variiert werden, wobei lediglich darauf zu achten ist, dass wasserlösliche Verbindungen erhalten werden. Pro Gewichtsteil eines Polyamins, Polyamidoamins, das gegebenenfalls mit Äthylenimin gepfropft ist, oder eines Polyätheramins verwendet man 0,01 bis 5, vorzugsweise 0,1 bis 2 Gewichtsteile des polymeren Vernetzers. Die Kondensationsreaktion kann kontinuierlich oder diskontinuierlich durchgeführt werden. Zur Herstellung der wasserlöslichen, stickstoffhaltigen Kondensationsprodukte kann man beispielsweise so vorgehen, dass man die zu vernetzenden Verbindungen in einem Reaktionsgefäss vorlegt, etwa 10% des polymeren Vernetzers zugibt, das Reaktionsgemisch auf eine Temperatur in dem Bereich von 40 bis 100 °C erhitzt und weiteren polymeren Vernetzer nach Massgabe des Verbrauchs kontinuierlich oder portionsweise zufügt. Man kann jedoch auch so verfahren, dass man den polymeren Vernetzer und die zu vernetzende Verbindung mischt und die Mischung langsam auf die Reaktionstemperatur erhitzt. Eine andere Verfahrensweise besteht darin, dass man zunächst 5 bis 15% einer Mischung aus polymeren Vernetzer und zu vernetzenden Verbindung in einem Reaktionsgefäss vorlegt, die Mischung dann auf die Reaktionstemperatur erhitzt und den Rest der Mischung aus polymeren Vernetzer und zu vernetzender Verbindung nach Massgabe der Umsetzung zuführt. Polymerer Vernetzer und zu vernetzende Verbindung können auch getrennt in die Reaktionszone eingebracht werden. Eine weitere Variationsmöglichkeit ist dadurch gegeben, dass man den polymeren Vernetzer vorlegt und die zu vernetzende Verbindung gegebenenfalls zusammen mit weiterem Lösungsmittel zuführt. Falls die Viskosität des Reaktionsgemisches bei der Kondensation zu stark ansteigen sollte, so dass die Reaktionskomponenten nicht mehr ohne weiteres gemischt werden können, wird das Reaktionsgemisch durch Zugabe eines Lösungsmittels, vorzugsweise Wasser, verdünnt.

Vorzugsweise werden Retentionsmittel und Entwässerungsmittel für die Papierindustrie dadurch hergestellt, dass man die oben beschriebenen mit Äthylenimin gepfropften Polyamidoamine mit den erfindungsgemäss zu verwendenden polymeren Vernetzern kondensiert.

Je nach Reaktionsbedingungen – Temperatur, Kondensation der Reaktionspartner und Lösungsmittel – ist die Kondensationsreaktion nach etwa 30 Minuten bis 15 Stunden beendet. Die Kondensation wird soweit geführt, dass wasserlösliche, hochmolekulare Harze erhalten werden, die gemessen bei 20 °C in 20%iger wässriger Lösung, eine Viskosität von mindestens 300 mPas aufweisen. Vorzugsweise stellt man Harze her, deren Viskositäten in 20%iger wässriger Lösung bei 20 °C bis 2500 mPas betragen. Der Verlauf der Vernetzungsreaktion kann leicht verfolgt werden, indem man dem Reaktionsgemisch Proben entnimmt und deren Viskosität unter den definierten Bedingungen bestimmt. Die Vernetzungsreaktion erfolgt bei pH-Werten oberhalb von 7, vorzugsweise in dem Bereich von 7,5 bis 12.

Die so hergestellten wasserlöslichen, stickstoffhaltigen Kondensationsprodukte werden bei der Papierherstellung als Retentionsmittel, Flokkungsmittel und Entwässerungshilfsmittel verwendet. Man kann das Reaktionsgemisch direkt oder nach dem Verdünnen mit Wasser bei der Papierherstellung einsetzen. Die wasserlöslichen, stickstoffhaltigen Kondensationsprodukte sind Retentionsmittel, Flockungsmittel und Entwässerungshilfsmittel und werden bei der Herstellung von Papier dem Papierstoff in einer Menge von 0,01 bis 0,3 Gew.%, bezogen auf trockenen Faserstoff, zugesetzt.

Die in den Beispielen angegebenen Teile sind Gewichtsteile, die Angaben in Prozent beziehen sich auf das Gewicht der Stoffe, sofern nichts anderes vermerkt ist. Die erfindungsgemäss hergestellten Produkte wurden als Entwässerungshilfsmittel getestet und bezüglich dieser Eigenschaften mit bekannten Entwässerungshilfsmitteln verglichen. Die Entwässerungsbeschleunigung wurde durch die Mahlgradsenkung in °SR charakterisiert. Der Mahlgrad nach Schopper-Riegler wurde nach der Vorschrift des Merkblatts 107 des Vereins der Zellstoff- und Papierchemiker und Ingenieure bestimmt. Sofern nicht anders angegeben, beziehen sich die Viskositätsangaben auf Messergebnisse, die an 20 gew.%igen wässrigen Lösungen bei einer Temperatur von 20 °C mit einem Haake-Rotationsviskosimeter ermittelt wurden, wobei in dem Viskositätsbereich unter 1000 mPas ein Schergefälle von 49 sec⁻¹ und darüber ein solches von 24,5 sec⁻¹ eingestellt wurde.

Die Füllstoffretention wurde durch den Aschegehalt von Papierblättern charakterisiert, die mit Hilfe eines Rapid-Köthengerätes nach Merkblatt 108 des Vereins der Zellstoff- und Papierchemiker und Ingenieure hergestellt wurden.

Die Kationenaktivität von wasserlöslichen kationischen Polyelektrolyten kann mit Hilfe einer speziellen Polyelektrolyt-Titration bestimmt werden, vgl. D. Horn, Prog. Kolloid- und Polymer Science 65, 251 bis 264 (1978).

Herstellung von Polyamidoaminen

Polyamidoamin 1

In einem beheizbaren Gefäss, das mit Rührer, Thermometer und absteigendem Kühler ausgestattet ist, werden 100 Teile Diäthylentriamin, 50 Teile Wasser und 140 Teile Adipinsäure gemischt. Sobald sich die Adipinsäure gelöst hat, wird die klare Lösung unter Stickstoffatmosphäre innerhalb von 3 Stunden auf eine Temperatur von 190 °C erhitzt. Hierbei destilliert zunächst das zugesetzte Wasser sowie das bei der Kondensationsreaktion entstehende ab. Nach einer Kondensationsdauer von 4 Stunden bei einer Temperatur von 190 °C wird die Schmelze unter vermindertem Druck bei 10 mbar auf eine Temperatur von 130 °C abgekühlt. Bei dieser Temperatur fügt man zu dem hochviskosen Polyamidoamin 200 Teile Wasser zu. Man erhält eine wässrige Harzlösung, deren Feststoffgehalt 50,9% (bestimmt durch 2 stündiges Trocknen von 0,5 g Harz bei 120 °C im Trockenschrank) und deren Viskosität 1361 mPas beträgt (gemessen bei 25C nach der Kugelfallmethode, Höppler-Viskosimeter). Bezogen auf 100%iges Harz beträgt die Säurezahl 3,74 und der Gehalt an basischem Stickstoff 6,2%. Eine 1%ige Harzlösung hat in 2%iger wässriger Kochsalzlösung bei einer Temperatur von 25 °C eine spezifische Viskosität von 0,16.

Polyamidoamin 2 (äthyleniminmodifiziertes Polyamidoamin) 500 Teile der 50,9%igen wässrigen Lösung des Polyamidoamins 1 (ca. 250 Teile des 100%igen Polyamidoamins 1) werden in einem mit Rührer, Rückflusskühler und Thermometer ausgestatteten Reaktionsgefäss vorgelegt, mit 10 Teilen p-Toluolsulfonsäure versetzt und auf 65 °C erhitzt. Innerhalb von 3 Stunden tropft man 500 Teile einer 50%igen wässrigen Lösung von Äthylenimin zu. Unmittelbar nach der Zugabe des Äthylenimins steigt die Temperatur der Reaktionslösung an. Die Reaktionstemperatur wird in dem Bereich von 80 bis 90 °C gehalten. Nach beendeter Äthyleniminzugabe wird die Reaktionsmischung noch 2 Stunden bei einer Temperatur von 80 °C gehalten und danach mit 990 Teilen Wasser verdünnt. Man erhält eine ~25%ige Lösung des mit Äthylenimin modifizierten Polyamidoamins 2.

Beispiel 1

a) Herstellung des Vernetzers 1

Es wird zunächst eine wässrige Lösung eines polymeren Vernetzers hergestellt, in dem man 215,35 Teile Piperazin in Form einer 50%igen wässrigen Lösung auf eine Temperatur von 88 °C erhitzt und bei dieser Temperatur dazu innerhalb von 45 Minuten 208,2 g Epichlorhydrin als 50%ige Lösung in Methanol zutropft. Das Molverhältnis von Piperazin zu Epichlorhydrin beträgt in der ersten Stufe 1:0,9. Der pH-Wert der Lösung wird durch Zugabe von 50%iger wässriger NaOH so eingestellt, dass ein Wert von 10 bis 10,5 aufrechterhalten wird. Nachdem das Reaktionsgemisch noch 1½ Stunden bei einer Temperatur von 80 bis 90 °C gehalten wird, setzt man Salzsäure bis zu einem pH von 5,5 zu und fügt dann innerhalb von 2 Minuten 108 Teile Epichlorhydrin als 50%ige Lösung in Methanol zu. Während der Reaktionszeit von 2 Stunden destilliert man das Methanol kontinuierlich ab. Man erhält eine wässrige Lösung, die auf einen Polymerengehalt von 20% (salzfrei und säurefrei gerechnet) durch Zugabe von Wasser verdünnt wird. Bei der Epichlorhydrinzugabe in der zweiten Reaktionsstufe betrug der pH-Wert 5,5. Die 20%ige wässrige Lösung des Vernetzers 1 hat bei einer Temperatur von 20 °C eine Viskosität von 200 mPas.

b) Herstellung eines vernetzten Polyamidoamins (Harz 1)

100 Teile einer auf 20% verdünnten wässrigen Lösung des Polyamidoamins 1 werden auf eine Temperatur von 60 °C erhitzt und im Verlauf von 120 Minuten mit 54,4 Teilen der 20%igen wässrigen Lösung des oben beschriebenen Vernetzers 1 versetzt. Man lässt eine Stunde nachreagieren. Die Vernetzungsreaktion nimmt bei einer Temperatur von 60 °C 3 Stunden in Anspruch. Danach erhält man eine wässrige Lösung eines stickstoffhaltigen Kondensationsproduktes, das bei einer Temperatur von 20 °C und einer Konzentration von 20% (gelöst in Wasser) eine Viskosität von 800 mPas hat. Nach Abschluss der Kondensation wird der pH-Wert der erhaltenen Harzlösung durch Zugabe von Ameisensäure von 11 auf 8 eingestellt. Das Harz wird als Retentionsmittel und Entwässerungshilfsmittel verwendet.

Beispiel 2

a) Herstellung des Versetzers 2

Zur Herstellung eines polymeren Vernetzers werden 215,35 Teile Piperazin in Form einer 50%igen wässrigen Lösung auf eine Temperatur von 88 °C erhitzt und innerhalb von 45 Minuten mit 208,2 Teile Epichlorhydrin versetzt. Während der Epichlorhydrinzugabe wird darauf geachtet, dass der pH-Wert des Reaktionsgemisches zwischen 9 und 9,5 beträgt. Zu diesem Zweck ist es erforderlich, dem Reaktionsgemisch 116 Teile einer 50%igen wässrigen Natronlauge zuzugeben. Das Molverhältnis von Piperazin zu Epichlorhydrin beträgt in der 1. Reaktionsstufe 1:0,9. Nach Zugabe des Epichlorhydrins wird das Reaktionsgemisch noch 90 Minuten bei einer Temperatur von 90°C gehalten, danach durch Zusatz von Salzsäure auf einen pH-Wert von 7,5 eingestellt. Dann gibt man innerhalb von 1 Minute 50 Teile Epichlorhydrin zu und hält die Mischung noch 1 Stunde bei einer Temperatur von 90°C. Danach wird der erhaltene polymere Vernetzer (2) durch Zugabe von Wasser auf einen Polymergehalt von 20% verdünnt. Eine 20%ige Lösung des Vernetzers hat bei einer Temperatur von 20°C eine Viskosität von 185 mPas.

b) Herstellung eines vernetzten, mit Äthylenimin gepfropften Polyimidoamins (Harz 2)

100 Teile einer auf 20% Feststoffgehalt verdünnten wässrigen Lösung des Polyamidoamins 2 werden auf eine Temperatur von 60°C erhitzt und innerhalb von 153 Minuten mit 45,5 Teilen einer 20%igen wässrigen Lösung des oben beschriebenen Vernetzers (2) versetzt. Nach einer Reaktionszeit von 4 Stunden bei einer Temperatur von 60°C erhält man eine wässrige Lösung eines stickstoffhaltigen Kondensationsprodukts (Harz 2), die abgekühlt und durch Zusatz von Ameisensäure auf pH 8 eingestellt wird. Eine 20%ige wässrige Lösung des Harzes 2 hat bei einer Temperatur von 20°C eine Viskosität von 800 mPas. Das Harz wird als Entwässerungshilfsmittel und Retentionsmittel verwendet.

Beispiel 3
a) Herstellung des Vernetzers 3

Zu einer 50%igen wässrigen Lösung von 340 Teilen Piperazin werden bei einer Temperatur in dem Bereich von 80 bis 90°C 277 Teile Epichlorhydrin als 50%ige Lösung in Methanol innerhalb von 1½ Stunden zugetropft. Dabei wird darauf geachtet, dass der pH-Wert in dem Bereich von 10 bis 10,5 liegt. Das Molverhältnis von Piperazin zu Epichlorhydrin beträgt in der 1. Reaktionsstufe 1:0,75. Die Kondensation des Epichlorhydrins mit dem Piperazin wird 2 Stunden bei 80°C fortgeführt, danach das Reaktionsgemisch durch Zugabe von konzentrierter Salzsäure auf einen pH-Wert von 7 eingestellt. Dann fügt man innerhalb von ca. 1 Minute 180 Teile Epichlorhydrin als 50%ige Lösung in Methanol zu. Das Reaktionsgemisch wird noch 2 Stunden auf einer Temperatur von 90°C gehalten. Danach destilliert man das Methanol ab und verdünnt den Vernetzer (3) durch Zugabe von Wasser auf einen Polymergehalt von 20%. Das Verhältnis von Piperazin zu Epichlorhydrin in diesem Vernetzer beträgt 1:1,25 die Viskosität einer 20%igen wässrigen Lösung bei einer Temperatur von 20°C 80 mPas.

b) Herstellung eines vernetzten, mit Äthylenimin gepfropften Polyamidoamins (Harz 3)

Zur Herstellung von Retentionsmitteln und Entwässerungshilfsmitteln erhitzt man 100 Teile einer auf 20% verdünnten wässrigen Lösung des Polyamidoaminharzes 2 auf eine Temperatur von 60°C und fügt dazu innerhalb von 210 Minuten 36,3 Teile 20%igen wässrigen Lösung des oben beschriebenen Vernetzers (3). Die Kondensationsreaktion ist nach 240 Minuten beendet. Man erhält dann ein wasserlösliches stickstoffhaltiges Kondensationsprodukt, dessen 20%ige wässrige Lösung bei einer Temperatur von 20°C eine Viskosität von ~800 mPas hat. Der pH-Wert der Harzlösung wird durch Zusatz von Ameisensäure auf 8 eingestellt (Harz 3).

Beispiel 4

100 Teile eines Polyäthylenimins (Viskosität einer 50%igen wässrigen Lösung etwa 15000 mPas bei 20°C und 20 Upm nach Brookfield) werden in Form einer 20%igen wässrigen Lösung in einem Reaktionsgefäss vorgelegt, auf eine Temperatur von 60°C erwärmt und innerhalb von 300 Minuten mit 20,5 Teilen einer 20%igen Lösung des im Beispiel 3 beschriebenen Polymervernetzers (3) versetzt. Die Kondensation erfolgt bei einer Temperatur von 60°C innerhalb von 350 Minuten. Nach dieser Zeit hat eine 20%ige wässrige Lösung des Reaktionsprodukts eine Viskosität von 880 mPas bei einer Temperatur von 20°C. Der pH-Wert des Produktes wird auf 7 eingestellt. Das Kondensationsprodukt wird als Retentionsmittel und Entwässerungshilfsmittel verwendet.

Beispiel 5
a) Herstellung des Vernetzers 4

Zur Herstellung eines polymeren Vernetzers werden 285 Teile eines Isomerengemisches aus 70 Teilen 2,5-Dimethylpiperazin und 30 Teilen 2,6-Dimethylpiperazin in Form einer 50%igen wässrigen Lösung auf eine Temperatur von 80°C erhitzt und innerhalb von 45 Minuten mit 208,2 Teilen Epichlorhydrin versetzt. Durch NaOH-Zugabe während der Kondensation wird der pH-Wert auf 10 gehalten. (Molverhältnis Dimethylpiperazine:Epichlorhydrin = 1:0,9). Man belässt die Mischung noch weitere 45 Minuten bei der Temperatur von 80°C. Hierauf wird mit Salzsäure der pH-Wert auf 8,5 eingestellt. Dann gibt man innerhalb von 1 Minute 129 Teile Dichlorhydrin in Form einer 50%igen wässrigen Lösung zu und verdünnt mit Wasser auf 20% Polymerengehalt. Die Viskosität der 20%igen Lösung des so erhaltenen Vernetzers 4 beträgt 290 mPas.

b) Herstellung eines vernetzten mit Äthylenimin gepfropften Polyamidoamins

100 Teile einer auf 20% Feststoffgehalt verdünnten wässrigen Lösung des Polyamidoamins 2 werden auf 60°C erhitzt und innerhalb von 135 Minuten mit 60 Teilen des oben beschriebenen Vernetzers 4 versetzt. Nach einer Gesamtreaktionszeit von 195 Minuten bei einer Temperatur von 60°C erhält man eine wässrige Lösung eines vernetzten stickstoffhaltigen Kondensationsproduktes (Harz 5), die abgekühlt und durch Zugabe von Ameisensäure auf pH gestellt wird. Die Viskosität einer 20%igen wässrigen Harzlösung bei 20°C beträgt 735 mPas.

Beispiel 6

a) Herstellung des Vernetzers 5

Zur Herstellung eines Polymeren Vernetzers werden 220 Teile N,N'-Dimethyläthylendiamin in Form einer 50%igen wässrigen Lösung bei 95°C innerhalb von 60 Minuten mit 208,2 Teilen Epichlorhydrin erzeugt. Durch NaOH-Zugabe während der Reaktion wird der pH auf 9,8 gehalten. Molverhältnis des Diamins zu Epichlorhydrin = 1:0,9). Man belässt die Mischung weitere 68 Minuten bei 80°C. Hierauf wird der pH-Wert der Mischung mit Schwefelsäure auf 6 gestellt.

Danach gibt man innerhalb von 1 Minute 50 Teile Epichlorhydrin zu und hält noch 1 Stunde bei 80°C. Darauf wird auf 20% Polymerengehalt verdünnt. Die Viskosität des Vernetzers 5 beträgt 282 mPas bei 20°C in 20%iger wässriger Lösung.

b) Herstellung eines vernetzten Polyamidoamins

100 Teile einer auf 20% Feststoffgehalt verdünnten wässrigen Lösung des Polyamidoamins 2 wurden auf eine Temperatur von 60°C erhitzt und innerhalb von 140 Minuten mit 48,2 Teilen des oben beschriebenen Vernetzers 5 versetzt. Nach einer Reaktionszeit von 4 Stunden bei einer Temperatur von 60°C erhält man eine wässrige Lösung eines Polykondensates (Harz 6) das abgekühlt und durch Zusatz von Ameisensäure auf pH 8 eingestellt wird. Eine 20%ige wässrige Lösung des Harzes 6 hat eine Viskosität von 1380 mPas. Das Harz wird als Retentions- und Entwässerungshilfsmittel verwendet.

Vergleichsbeispiel 1

(Beispiel gemäss DE-OS 24 34 816)

100 Teile einer 20%igen wässrigen Lösung des Polyamidoaminharzes 2 werden auf eine Temperatur von 60°C erhitzt und durch Zugabe von 40,5 Teilen einer 20%igen wässrigen Lösung eines Vernetzers aus einem Polyglykoläther des Molekulargewichts 1500, der mit 2,05 Mol Epichlorhydrin umgesetzt worden ist, bis zur Bildung hochmolekularer Produkte vernetzt. Die Vernetzungsreaktion dauert 350 Minuten. Nach dieser Zeit erhält man ein Kondensationsprodukt, dessen 20%ige wässrige Lösung bei einer Temperatur von 25°C eine Viskosität von 830 mPas hat.

Vergleichsbeispiel 2

Eine 20%ige wässrige Lösung von Polyäthylenimin, das ca. ~ 100 Äthylenimineinheiten enthält und eine Viskosität von 400 mPas (20°C, 20%ige wässrige Lösung) hat, wird als Entwässerungshilfsmittel und Retentionsmittel getestet.

Vergleichsbeispiel 3

100 Teile der im Beispiel 4 beschriebenen 20%igen wässrigen Lösung des Polyäthylenimins werden auf eine Temperatur von 60°C erhitzt und durch Zugabe von 60,5 Teilen einer 20%igen wässrigen Lösung eines Polymervernetzers, erhalten durch Umsetzung von Polyäthylenglykol des Molekulargewichts von 1500 mit 2,05 Mol Epichlorhydrin (Vernetzer gemäss Vergleichsbeispiel 1), innerhalb von 350 Minuten vernetzt..

Prüfung der anwendungstechnischen Eigenschaften der gemäss den Beispielen und Vergleichsbeispielen hergestellten Harze.

Die gemäss den Beispielen und Vergleichsbeispielen erhaltenen Stoffe werden auf ihre Wirkung als Entwässerungshilfsmittel und Retentionsmittel getestet. Für die Charakterisierung der Entwässerungsbeschleunigung der Stoffe die Mahlgradsenkung in °SR an einer Faserstoffaufschlämmung geprüft, die durch Aufschlagen von Zeitungspapier mit Hilfe eines Ultraturrax-Gerätes erhalten wurde. In der Tabelle 1 sind die Werte zusammengestellt, jeder darin angegebene Wert ist ein Mittelwert aus 8 Messungen. Die Messungen wurden bei pH 7,3 in Abwesenheit von Alaun und bei einem pH-Wert von 4,8 in Gegenwart von 1,5% Alaun durchgeführt. Die Nullwerte werden ohne Zusatz eines Harzes zum Faserstoff ermittelt.

Tabelle 1
Prüfung der Entwässerungswirkung:

| pH | 7,3 | | 4,8 | |
|---|---|---|---|---|
| Nullwert | 76° SR | | 70,3 SR | |
| Zusatz | 0,06% | 0,08% | 0,06% | 0,09% |
| Harz gemäss Beispiel | °SR | | | |
| 1 | 56 | 51 | 60 | 59 |
| 2 | 56 | 52 | 57 | 56 |
| 3 | 56 | 51,5 | 58 | 57,5 |
| 4 | 56 | 51,5 | 62 | 61 |
| 5 | 56 | 52 | 59 | 57 |
| 6 | 56 | 51 | 56 | 56 |
| Harz gemäss Vergl. Bsp. | | | | |
| 1 | 56 | 53 | 62 | 59 |
| 2 | 54 | 53 | 68 | 67 |
| 3 | 60 | 58 | 63 | 63 |

Tabelle 2
Prüfung der Retentionswirkung der Harze gemäss Beispiel 1 bis 4 und der Vergleichsbeispiele 1 bis 3 an einer Faserstoffaufschlämmung, die zu 80% aus gebleichtem Sulfitzellstoff (angemahlen, 37°SR) und 20% Füllstoff (Chinaclay) bestand. Die Füllstoffretention wurde bei Zusätzen von 0,015, 0,03 und 0,045% der Harze zum Papierstoff bestimmt. Als Füllstoff wurde Chinaclay verwendet; es wurde bei pH von 6 (0,5% Alaun-Zusatz zum Stoff) und 4,8 (Zusatz von 1,5% Alaun) gearbeitet.

| | | | | | | | Kationenaktivität (gemessen am Verbrauch in |
|---|---|---|---|---|---|---|---|
| pH-Wert der Fasersuspension | | | 6 | | 4,8 | | mg) |
| Einsatzmengen | 0,015 | 0,03 | 0,045 | 0,015 | 0,03 | 0,045 | Ca-polyvinylsulfonat |
| Retention gemessen in % | | | | | | | pro 5 ml |
| Asche im Papier | | | | | | | einer 20%igen |
| kein Harzzusatz zur | | | | | | | |
| Fasersuspension (Nullwert) | | 3,4 | | | 3,8 | | Harzlösung) |
| Zusatz von Harz gemäss Beispiel | | | | | | | |
| 1 | 8,1 | 9,4 | 10,5 | 7,8 | 9,0 | 10,8 | 1,28 |
| 2 | 7,6 | 8,5 | 10 | 7,6 | 8,1 | 8,5 | 2,20 |
| 3 | 7,6 | 8,3 | 10,1 | 7,7 | 8,5 | 9,3 | |
| 4 | 7,3 | 8,3 | 9,2 | 5,9 | 6,5 | 7,2 | |
| 5 | 7,8 | 8,6 | 9,9 | 7,1 | 9,0 | 8,9 | |
| 6 | 8,0 | 8,7 | 10,1 | 7,4 | 8,9 | 10,3 | |
| Zusatz von Harz gemäss Vergleichsbeispiel | | | | | | | |
| 1 | 7,5 | 8,6 | 9,8 | 6,7 | 6,9 | 8,4 | |
| 2 | 6,8 | 7,0 | 7,4 | 4,9 | 4,9 | 5,1 | 2,88 |
| 3 | 7,5 | 8,7 | 9,1 | 7,5 | 8,2 | 8,8 | 0,64 |

## Patentansprüche

1. Verfahren zur Herstellung von wasserlöslichen Kondensationsprodukten durch Umsetzung von disekundären Diaminen mit Epichlorhydrin und/oder Dichlorhydrin in einer wässrigen Lösung, dadurch gekennzeichnet, dass man in der ersten Stufe disekundäre Diamine mit Epichlorhydrin und/oder Dichlorhydrin in einem Molverhältnis von 1:0,5 bis 1:1 in dem pH-Bereich von 9 bis 12 kondensiert, wobei man eine anorganische Base zusetzt, um den pH-Wert während der Kondensation in dem Bereich von 9 bis 12 zu halten und in der zweiten Stufe das in der ersten Stufe erhaltene Kondensationsprodukt nach Zusatz einer Säure mit 1 bis 70 Gew.-Teilen, bezogen auf 100 Gewichtsteile des Kondensationsproduktes der ersten Stufe, Epichlorhydrin und/oder Dichlorhydrin in dem pH-Bereich von 4 bis 8,5 umsetzt.

2. Verfahren nach Anspruch 1, dadurch gekennzeichnet, dass man als disekundäre Diamine Piperazin verwendet.

3. Verwendung der nach den Ansprüchen 1 und 2 hergestellten wasserlöslichen Kondensationsprodukte zum Vernetzen von Polyaminen, Polyamidoaminen, äthyleniminimodifizierten Polyamidoaminen oder Polyätheraminen in wässriger Lösung bei Temperaturen bis zu 200 °C unter Bildung von wasserlöslichen Harzen.

4. Verwendung der nach Anspruch 3 hergestellten wasserlöslichen Harze als Retentionsmittel, Flockungsmittel und Entwässerungshilfsmittel bei der Papierherstellung.

## Claims

1. A process for the preparation of water-soluble condensates by reacting di-secondary diamines with epichlorohydrin and/or dichlorohydrin in an aqueous solution, wherein, in the first stage, di-secondary diamines are condensed with epichlorohydrin and/or dichlorohydrin in a molar ratio of from 1:0.5 to 1:1, at a pH of from 9 to 12, an inorganic base being added to maintain the pH at from 9 to 12 during the condensation, and, in the second stage, the condensate obtained in the first stage is reacted, after the addition of an acid, with from 1 to 70 parts by weight of epichlorohydrin and/or dichlorohydrin per 100 parts by weight of the condensate from the first stage, at a pH of from 4 to 8,5.

2. A process as claimed in claim 1, wherein piperazine is used as the di-secondary diamine.

3. The use of the water-soluble condensates prepared according to claims 1 and 2 for crosslinking polyamines, polyamidoamines, ethylene-imine-modified polyamidoamines or polyetheramines in aqueous solution at up to 200 °C, to form water-soluble resins.

4. The use of the water-soluble resins prepared according to claim 3 as retention aids, flocculants and drainage aids in papermaking.

**Revendications**

1. Procédé de préparation de produits de condensation hydrosolubles par réaction de diamines disecondaires avec l'épichlorhydrine et(ou) la dichlorhydrine en solution aqueuse, caractérisé en ce que dans un premier stade, l'on condense des diamines disecondaires et l'épichlorhydrine et(ou) la dichlorhydrine dans un rapport molaire de 1:0,5 à 1:1 dans la gamme de pH de 9 à 12, cette gamme de pH de 9 à 12 étant maintenue pendant la condensation par addition d'une base minérale, et dans un deuxième stade, l'on fait réagir le produit de la condensation du premier stade, après addition d'un acide, dans la gamme de pH de 4 à 8,5 avec 1 à 70 parties en poids, pour 100 parties en poids du produit de condensation du premier stade, d'épichlorhydrine et(ou) de dichlorhydrine.

2. Procédé suivant la revendication 1, caractérisé en ce que l'on emploie en tant que diamine disecondaire la pipérazine.

3. Utilisation des produits de condensation hydro-solubles, préparés par le procédé des revendications 1 et 2, pour la réticulation de polyamines, de polyamido-amines, de polyéther-amines et de polyamido-amines modifiées par de l'éthylène-imine, en solution aqueuse à des températures pouvant aller jusqu'à 200°C, avec formation de résines hydrosolubles.

4. Utilisation des résines hydrosolubles préparées par le procédé de la revendication 3 comme agents de rétention, agents de floculation et additifs de déshydratation dans la fabrication du papier.